# DEMANDE DE BREVET EUROPEEN

(11) **EP 0 846 546 A1**
(43) Date de publication de la demande: **10.06.1998**
(21) Numéro de dépôt: 97402754.2
(22) Date de dépôt: 17.11.1997
(51) Int. Cl.: B29C 49/62, B29C 33/10

(54) **Moulage par soufflage d'un récipient en matière thermoplastique**

(30) Priorité: 04.12.1996 FR 9614881
(71) Demandeur: L'OREAL, 75008 Paris (FR)
(72) Inventeur: Baudin, Gilles, 95330 Domont (FR)
(74) Mandataire: Boulard, Denis

(57) **Abrégé**

La présente demande concerne un dispositif de moulage (1) d'axe longitudinal X, comportant une première demi-coque (2) et une seconde demi-coque (3), les deux demi-coques étant aptes à être réunies le long d'un plan d'ouverture (PJ2) de manière à former une empreinte de section transversale allongée, présentant un grand axe (A) et un petit axe (B), ledit plan d'ouverture du moule étant sensiblement perpendiculaire au grand axe (A). Selon l'invention chaque demi-coque (2, 3) comporte au moins deux parties longitudinales distinctes (5, 6; 7, 8), réunies le long d'au moins une surface de jonction (100), chaque surface de jonction étant délimitée par deux faces en regard (16, 17) de deux parties adjacentes, l'une au moins des faces (16, 17) présentant au moins un évidement de manière à définir avec l'autre face au moins une fente étroite (10, 11, 12) pour permettre, lors du soufflage de l'objet, un échappement d'air selon ladite surface.

## Description

La présente invention a trait à un dispositif de moulage, et à un procédé de fabrication de récipients ou d'objets thermoplastiques de forme allongée, présentant un grand axe et un petit axe. L'invention est tout particulièrement adaptée à la fabrication de flacons de section transversale sensiblement elliptique, rectangulaire, ou ovale, de type présentant un corps dont une extrémité présente un fond transversal, l'autre extrémité se terminant par un col relié au corps du flacon par un épaulement, et sur lequel est monté un bouchon pour fermer de manière amovible le flacon. Le procédé peut également être utilisé pour la fabrication de récipients sous forme de tubes.

De tels récipients sont utilisés notamment pour le conditionnement de produits de consistance liquide à pâteuse, tels qu'utilisés dans le domaine de la cosmétique, de la pharmacie, de la para pharmacie, ou dans le domaine de l'agro-alimentaire.

Le domaine du flaconnage, a vu ces dernières années le développement massif de récipients dont la section transversale est de forme allongée, ceci principalement pour des raisons de marketing, d'esthétique, d'encombrement, ou de prise en main.

Typiquement, de tels récipients sont réalisés généralement par soufflage d'une ébauche tubulaire obtenue par extrusion ou par injection, ou dans le cadre d'un récipient bi-matière, par co-extrusion ou bi-injection.

Selon la technique d'extrusion par exemple, les matières plastiques sont chauffées et mises sous pression par un ensemble vis-fourreau afin de fournir, par l'intermédiaire d'une tête d'extrusion, une ébauche tubulaire sous forme d'une paraison chaude. Cette ébauche tubulaire est prise ensuite entre deux demi-moules qui présentent la forme inverse du récipient désiré et le soufflage permet la mise en forme de la paraison qui s'étire sous la pression et prend la forme du moule. Un refroidissement permet la fixation de la matière dans la forme ainsi obtenue.

Dans le cas de l'injection, on réalise une préforme, dans un moule intermédiaire dont la forme est adaptée à la forme du récipient à réaliser. La préforme est refroidie sans soufflage de la matière. Ensuite, en vue de l'obtention du récipient sous sa forme finale, on l'introduit à température appropriée (typiquement autour de 80°C) dans un moule à l'intérieur duquel elle est soufflée de manière à lui conférer la forme finale du récipient.

Traditionnellement, le moule est arrangé de sorte que le plan de joint (plan le long duquel sont joints les deux demi-coques du moule) soit dans le plan médian passant par le grand axe du flacon. Cette solution permet de faciliter le démoulage. Un inconvénient majeur de cette solution réside dans le fait que pour un moule de dimensions données, on ne peut disposer qu'un nombre relativement limité d'empreintes, de sorte que relativement peu de flacons peuvent être réalisés simultanément.

La demande de brevet GB-A-2 292 905 décrit un procédé de soufflage dans un moule, de bouteilles en matériau plastique, dont la section transversale est de forme allongée. Le moule comporte deux demi-coques formant une cavité de forme complémentaire de la forme de la bouteille. Les demi-coques sont reliées le long d'un plan de joint situé dans le plan médian passant par le petit axe de la bouteille. Sur la bouteille ainsi obtenue, les lignes de jointure sont situées sur les grandes faces de la bouteille. Ainsi que mentionné dans ce document, ces lignes de jointure peuvent être masquées sur le produit final en apposant sur l'une ou l'autre des grandes faces, voire sur les deux, une étiquette.

Ce document met en avant le fait que plus de bouteilles peuvent être moulées en même temps. On augmente ainsi de manière substantielle la productivité des équipements, et bien que le moule soit d'un coût plus élevé, la différence est vite compensée par le gain sensible de productivité.

Un des paramètres critiques du soufflage, est lié au problème des évents dans le moule qui doivent permettre de chasser hors du moule, l'air emprisonné entre la matière et le parois du moule. La demande de brevet GB-A-2 292 905 est totalement silencieuse à ce sujet. Ces évents sont pourtant indispensables pour permettre un soufflage du récipient dans de bonnes conditions. Dans le Précis de matières plastiques, 5^{ème} édition, publié chez NATHAN, page 135, il est mentionné que le moule doit être muni d'un réseau très efficace d'évents pour que le soufflage de l'objet soit facile. Si les trous sont trop petits (inférieurs à 0,1 mm), l'air s'évacue mal. Si les trous sont trop gros (diamètre de 0,3 mm), ils marquent la surface de l'objet et affectent l'esthétique du produit final. Des fentes ménagées dans le plan de joint de 0,1 mm d'épaisseur et de 25 mm de largeur, ou de 0,03 mm sur une largeur de 5 mm sont mentionnés comme donnant de bons résultats. Dans les autres parties du moule, il est recommandé de percer un trou cylindrique et de le reboucher avec un hexagone. L'air peut passer ainsi entre les pans de hexagone et les parois internes du trou.

Une telle configuration est tout à fait satisfaisante pour des moules, dont la distance entre l'axe longitudinal du moule et les parois du moule est sensiblement la même en tout point du moule. C'est notamment le cas pour un objet dont la section transversale est cylindrique de révolution. En effet dans cette configuration, la matière vient se plaquer de manière sensiblement simultanée en tout point du moule.

Pour un objet de forme allongée, et notamment pour un récipient de forme elliptique par exemple, la matière vient se plaquer en premier lieu sur les parois du moule situées sur le petit axe, puis, en dernier lieu sur les parois du moule situées sur le grand axe. Ainsi, en réalisant un trou, centré sur le grand axe, puis en le rebouchant au moyen d'un élément hexagonal, l'échappement d'air sera nettement insuffisant au niveau du grand axe du moule, en raison de la présence de l'hexagone, qui est également centré sur l'axe. Décaler le trou par rapport à l'axe, n'est pas satisfaisant du point de vue de l'esthétique du résultat. Par ailleurs, de tels évents sont sujets à un encrassement rapide. L'opération de nettoyage de ces évents est longue et coûteuse en temps machine. De même, la réalisation de fentes alignées sur le grand axe du moule, par perçage de la paroi du moule, est une opération trop complexe et trop coûteuse, en raison des dimensions que doivent présenter de telles fentes. Leur entretien serait également très délicat.

Une autre solution à ces problèmes d'échappement d'air consiste à utiliser un moule en un matériau poreux dont la structure permet un échappement d'air en tout point du moule. Cette solution, quoique attrayante, présente l'inconvénient d'être coûteuse. Par ailleurs, il se produit un encrassement rapide des pores du moule, en raison des particules de matière, ou poussières, véhiculées avec l'air lors du soufflage.

Une autre solution moins coûteuse consisterait à réaliser des petits trous, de section circulaire par exemple, dans la paroi du moule, et à les remplir avec une pièce d'un matériau poreux, de section identique à celle du trou, de manière à obturer le trou en sa quasi-totalité. L'air pourrait ainsi s'échapper au travers des pores du matériau de la pièce de remplissage. Une telle solution, même si elle contribuerait à améliorer sensiblement l'échappement d'air en regard du grand axe du moule, présenterait cependant les mêmes problèmes d'encrassement que ceux évoqués précédemment, en référence au moule poreux. Très vite, en effet, l'échappement d'air deviendrait insuffisant, voire complètement inefficace.

Le brevet GB 989 179 décrit en référence à sa figure 9 un procédé de moulage d'un flacon de section transversale allongée, dans lequel le plan de joint est orienté perpendiculairement au grand axe du flacon, c'est à dire dans le plan médian du flacon passant par le petit axe du flacon. Une telle configuration de soufflage est également suggérée dans le brevet GB 935 183. Ces documents sont également totalement silencieux sur le problème des évents nécessaires au soufflage.

Ce problème est donc jusqu'à ce jour sans solution réellement satisfaisante.

Aussi, est-ce un des objets de la présente invention que de fournir un procédé de soufflage dans un moule, d'un récipient de section transversale allongée, ne présentant pas les inconvénients mentionnés ci-avant, en référence aux dispositifs connus de la technique antérieure.

C'est en particulier un objet de la présente invention que d'apporter une solution, simple, économique, efficace, et durable dans le temps, au problème d'échappement d'air lors du soufflage dans un moule, d'un récipient de forme allongée.

C'est encore un autre objet de l'invention que de réaliser un moule permettant la mise en oeuvre du procédé de soufflage selon l'invention.

D'autres objets de l'invention apparaîtront de manière détaillée dans la description qui suit.

La demanderesse a découvert de manière surprenante que le problème pouvait être résolu de façon intéressante, en réalisant chaque demi-coque sous forme d'au moins deux parties distinctes, maintenues jointives le long d'au moins une surface de jonction, ladite surface servant de support à un réseau d'évents. Ainsi, on réalise dans chaque demi-coque au moins une surface de jonction, qui intercepte la surface interne du moule sensiblement, à l'endroit (ou aux endroits) le plus éloigné(s) de l'axe longitudinal du moule.

Selon un mode de réalisation, on réalise un "pseudo" plan de joint, perpendiculairement au plan d'ouverture du moule, et dont la seule fonction est de servir de support à un réseau d'évents, sous forme d'au moins une fente étroite. Le terme "pseudo" plan de joint traduit le fait qu'il ne définit pas un plan d'ouverture, au sens où on l'entend habituellement. Ainsi, selon l'invention, on réalise un moule en au moins quatre parties, qui lors de son utilisation, s'ouvre seulement en deux parties, les deux autres parties étant maintenues solidaires et serrées l'une contre l'autre par des moyens appropriés.

Selon l'invention, ces objets sont atteints en réalisant un moule de soufflage d'axe longitudinal X, comportant une première demi-coque et une seconde demi-coque, les deux demi-coques étant aptes à être réunies, en vue du soufflage d'un objet, le long d'un premier plan de joint, de manière à former une empreinte de section transversale allongée, présentant un grand axe et un petit axe, ledit premier plan de joint étant sensiblement perpendiculaire au grand axe, les demi-coques s'écartant selon une direction perpendiculaire audit premier plan de joint lors du démoulage de l'objet, caractérisé en ce que chaque demi-coque comporte au moins deux parties longitudinales, distinctes, réunies le long d'au moins une surface de jonction, chaque surface de jonction étant délimitée par deux faces en regard de deux parties adjacentes, l'une au moins des faces présentant au moins un évidement de manière à définir avec l'autre face au moins une fente étroite pour permettre, lors du soufflage de l'objet, un échappement d'air selon ladite surface

Avantageusement, chaque demi-coque comporte deux parties distinctes, dont deux faces respectives sont maintenues jointes le long d'un second plan de joint situé sur le grand axe, et perpendiculaire au premier, l'une au moins des faces présentant au moins un évidement de manière à définir en chacune des extrémités du moule situées sur le grand axe, au moins une fente étroite orientée selon l'axe X, afin de permettre un échappement d'air selon le grand axe.

Une pluralité d'évidements peuvent être répartis de manière régulière sur la hauteur du moule, les évidements étant réalisés en alternance sur l'une et l'autre des faces délimitant la (ou les) surface(s) de jonction.

Alternativement, la pluralité d'évidements est répartie de manière régulière sur la hauteur du moule, lesdits évidements étant disposés sur une seule desdites faces délimitant la (ou les) surface(s) de jonction.

Avantageusement, les deux demi-coques sont jointes lors du soufflage de part et d'autre du grand axe le long de deux faces respectives, l'une au moins des faces respectives présentant au moins un évidement de manière à définir en chacune des extrémités du moule situées sur le petit axe, au moins une fente étroite orientée selon l'axe X, afin de permettre un échappement d'air selon le petit axe.

Les fentes peuvent avoir une hauteur selon l'axe X comprise entre 3 mm et 25 mm, et de préférence, comprise entre 5 mm et 15 mm, et une largeur comprise entre 0,01 mm et 0,1 mm, et de préférence comprise entre 0,02 mm et 0,06 mm.

Le moule peut comporter une pluralité d'empreintes de manière à mouler une pluralité d'objets simultanément, lesdites empreintes étant disposées de sorte que leurs grands axes soient disposés côte à côte, les petits axes étant sensiblement alignés. Un premier organe de serrage peut être prévu pour maintenir de manière solidaire lesdites premières demi-coques de ladite pluralité d'empreintes et un second organe de serrage est prévu pour maintenir de manière solidaire lesdites seconde demi-coques de ladite pluralité d'empreintes, de manière à permettre un démoulage simultané de ladite pluralité d'objets.

Selon l'invention, on réalise également un procédé de soufflage dans un moule d'axe X, d'un objet ou d'un récipient thermoplastique, de section transversale allongée présentant un grand axe et un petit axe, dans lequel le récipient est soufflé dans un moule selon l'invention.

Le récipient thermoplastique peut être constitué d'un matériau tel que du polyéthylène haute densité ou basse densité, polypropylène, polyéthylène térephtalate, chlorure de polyvinyle, ou d'un complexe de tels matériaux.

Le récipient peut être de type comportant un corps dont une extrémité comporte un fond et dont l'autre extrémité se termine par un col, relié au corps par un épaulement, Avantageusement, le corps du flacon comporte le long du grand axe, deux faces convexes de manière à faciliter le démoulage.

Une pluralité de récipients peuvent être moulés simultanément lors d'une même opération de moulage, le moule définissant une pluralité d'empreintes disposées de sorte que les récipients aient leurs grands axes disposés côte à côte, les petits axes étant sensiblement alignés.

L'invention concerne également un procédé de fabrication d'un récipient thermoplastique, de section transversale allongée présentant un grand axe et un petit axe, comprenant les étapes suivantes
a) réaliser une ébauche tubulaire en matériau thermoplastique;
b) introduire l'ébauche tubulaire dans un moule de soufflage;
c) souffler ladite ébauche tubulaire de manière à plaquer le matériau thermoplastique contre les parois internes du moule; et
d) après refroidissement, démouler le récipient;
caractérisé en ce que le moule de soufflage est conforme à l'invention.

L'ébauche tubulaire est obtenue de préférence par extrusion.

L'invention vise également un récipient obtenu par le procédé selon l'invention.

Ainsi, avec le moule utilisé selon la présente invention, on réalise un soufflage de récipients, amélioré par une bonne disposition des évents. Ces évents, de par leur position sur un "pseudo" plan de joint sont faciles à réaliser, et peuvent être réalisés aux dimensions souhaitées, aussi petites soient-elles. L'entretien et la maintenance d'un tel moule sont également facilités par le fait que le nettoyage des évents peut se faire tout simplement en démontant les parties correspondantes du moule.

L'invention consiste, mises à part les dispositions exposées ci-dessus, en un certain nombre d'autres dispositions qui seront explicitées ci-après, à propos d'exemples de réalisation non limitatifs, décrits en référence aux figures annexées, parmi lesquelles :
- les figures 1A-1C illustrent de façon schématique différents aspects d'un moule pouvant être utilisé pour la mise en oeuvre du procédé de soufflage selon l'invention;
- les figures 2A-2C illustrent les principales étapes d'un mode de réalisation du procédé selon l'invention;
- la figure 3 illustre un autre mode de réalisation d'un moule selon l'invention;
- les figures 4 et 5 illustrent un autre mode de réalisation d'un moule comportant une pluralité d'empreintes, et
- la figure 6 représente un mode de réalisation d'un récipient obtenu selon l'invention.

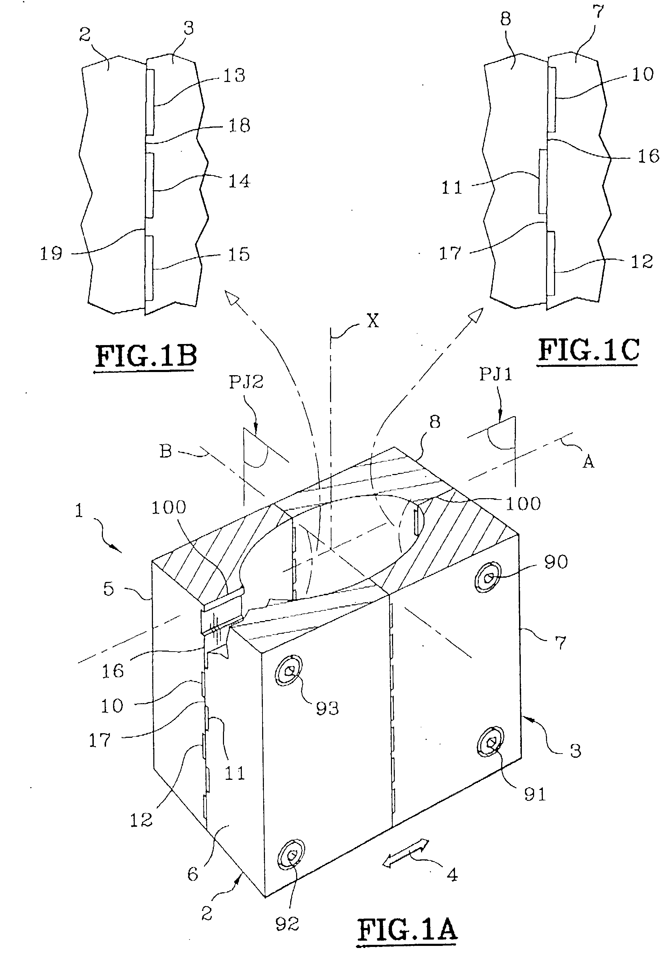

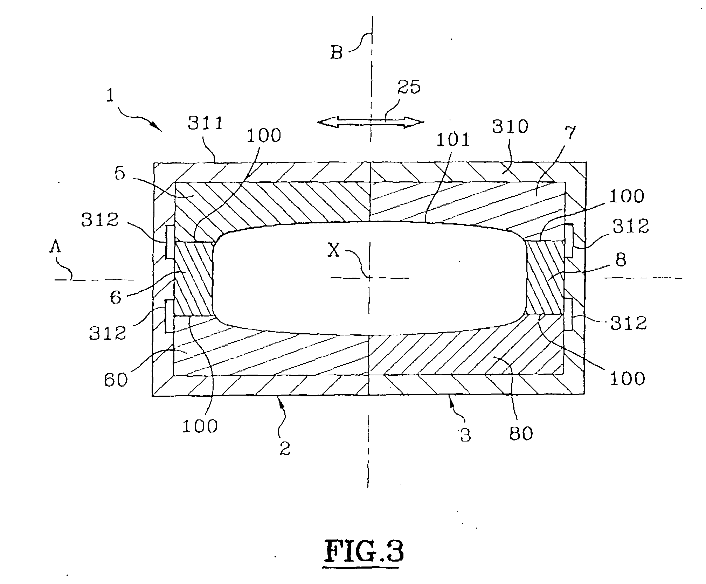

La figure 1 à laquelle il est maintenant fait référence, illustre une vue en perspective d'un mode de réalisation d'un moule selon la présente invention. En réalité, le moule illustré est adapté à la fabrication d'un récipient de type flacon. Sur la figure 1A n'est représentée que la partie du moule correspondant au corps du flacon. Le moule 1 d'axe longitudinal X, comprend principalement deux demi-coques 2 et 3 réunies le long d'un plan de joint PJ2, correspondant au plan médian passant par le petit axe du récipient. Les deux demi-coques sont montées de manière à pouvoir s'écarter l'une par rapport à l'autre, parallèlement au plan de joint PJ2, selon une direction perpendiculaire au plan de joint PJ2, dans le sens de la flèche 4, pour permettre le démoulage de l'objet réalisé. Les deux demi-coques, ainsi réunies le long du plan de joint PJ2 définissent une empreinte de forme complémentaire à la forme de l'objet à réaliser. La section transversale de l'empreinte est de forme allongée (elliptique, ovale, rectangulaire, etc.) présentant un grand axe A et un petit axe B. Dans ce mode de réalisation, la zone du moule la plus éloignée de l'axe longitudinal du moule, est la zone située sensiblement sur l'axe A. Chaque demi-coque 2, 3 est constituée de deux parties longitudinales 5, 6; 7, 8, maintenues serrées l'une contre l'autre par tout moyen approprié. Dans le mode de réalisation illustré, les parties formant chacune des demi-coques, sont maintenues solidaires l'une de l'autre au moyen de tiges filetées 90, 91, 92, 93, traversant la largeur du moule selon l'axe B. Alternativement, comme on le verra plus en détail en référence aux figures 3-5, le serrage peut être réalisé au moyen d'une carcasse en deux parties (une pour chaque demi-coque) dont la fonction, outre le serrage, est de contenir un circuit de refroidissement, pour le refroidissement de l'objet moulé.

Les deux parties formant chacune des demi-coques sont réunies le long d'une portion de surface 100, située dans un "pseudo" plan de joint PJ1, perpendiculaire au plan d'ouverture PJ2, et dont la fonction essentielle est de servir de support à un réseau d'évents 10, 11, 12, permettant de chasser l'air contenu entre la matière thermoplastique et les parois du moule, lors du soufflage. La portion de surface 100 est située en dehors du plan PJ2 (c'est à dire dans un plan non confondu avec le plan PJ2) et s'étend dans un plan parallèle à l'axe X. Les évents se présentent sous la forme d'évidements réalisés (par exemple par rectification) dans l'une ou l'autre (ou dans les deux) des parois 16, 17, le long desquelles les deux parties de chaque demi-coque sont jointes. Ainsi, en position montée du moule, ces évidements définissent sur le plan PJ1, une pluralité de fentes étroites, 10, 11, 12, et ce, en chacune des extrémités du moule selon l'axe A. Typiquement, ces fentes peuvent avoir une hauteur selon l'axe X comprise entre 3 mm et 25 mm, et de préférence, comprise entre 5 mm et 15 mm, et une largeur comprise entre 0,01 mm et 0,1 mm, et de préférence comprise entre 0,02 mm et 0,06 mm.

Avantageusement, on réalise des évents similaires le long du plan de joint d'ouverture PJ2. Ainsi que représentés à la figure 1B, les évidements sont réalisés sur une même face 18, de l'une ou l'autre des demi-coques. Selon le mode de réalisation de la figure 1C, les évidements sont réalisés en alternance sur une face 16, et sur l'autre face 17, de manière à équilibrer l'échappement d'air autour du plan de joint PJ1 ou PJ2. Alternativement, on réalise des évidements en regard, sur l'une et l'autre des faces, de manière à définir des fentes symétriques par rapport à PJ1 ou PJ2.

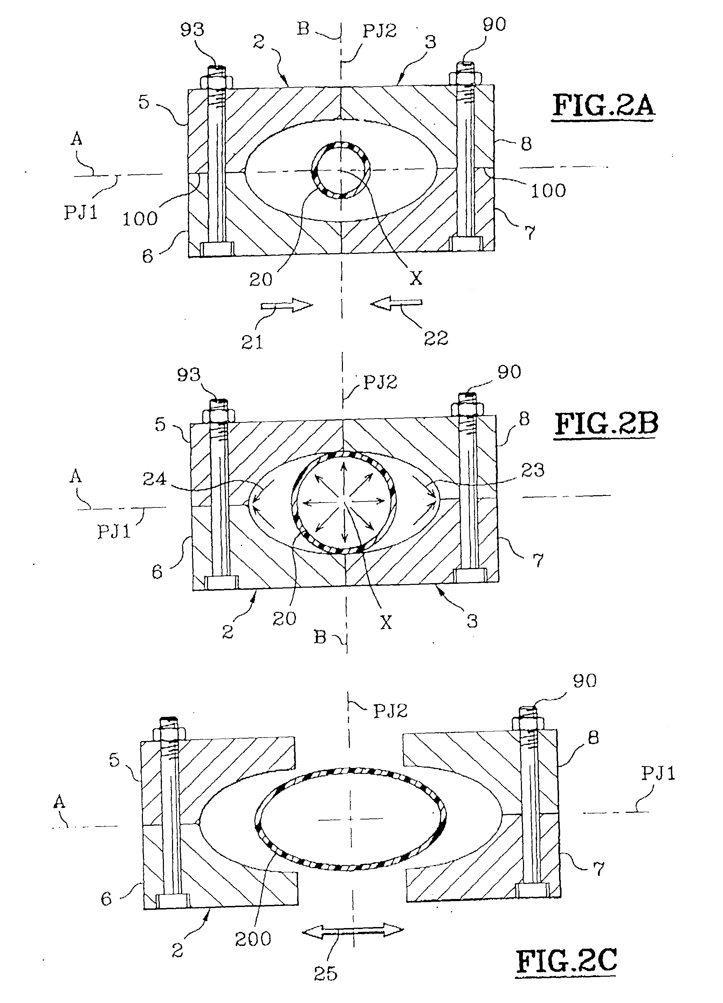

Les figures 2A-2C auxquelles il est maintenant fait référence, illustrent de manière schématique les étapes principales d'un procédé de réalisation d'un récipient selon la présente invention, au moyen d'un moule de type de celui décrit en référence aux figures 1A-1C.

En figure 2A, on referme les deux demi-coques 2, 3 du moule 1, sur une ébauche tubulaire 20, de section transversale sensiblement circulaire, selon un mouvement de direction perpendiculaire au plan PJ2, dans le sens des flèches 21, 22. L'ébauche tubulaire, en matériau thermoplastique est obtenue de façon classique par un procédé d'extrusion ou d'injection. Selon l'invention, la technique d'extrusion est préférée, dans la mesure le coût des équipements est sensiblement plus faible que celui de la technique d'injection, et notamment en ce qui concerne les moules. De plus, elle autorise une plus grande variété de formes d'objets. La technique d'extrusion offre notamment la possibilité d'obtenir des rapports plus grands entre le diamètre du col, et la largeur du corps du flacon. D'autre part, elle permet la réalisation d'objets multi couches, ce qui est difficile, donc extrêmement rare en injection.

En figure 2B, on introduit un dispositif de soufflage à l'intérieur du moule, et de la paraison 20, de manière à étendre la matière et à la plaquer contre les parois du moule. L'air contenu entre la matière et les parois du moule, s'échappe en premier lieu par les évents éventuels ménagés sur le plan de joint PJ2, puis par les évents ménagés sur le plan de joint PJ1, de la manière indiquée par les flèches 23, 24. Ainsi, la matière peut se coller parfaitement contre les parois du moule.

En figure 2C, après refroidissement de la matière soufflée, on écarte les demi-coques 2, 3 selon une direction perpendiculaire au plan de joint PJ2, dans le sens de la flèche bidirectionnelle 25, de manière à démouler l'objet 200.

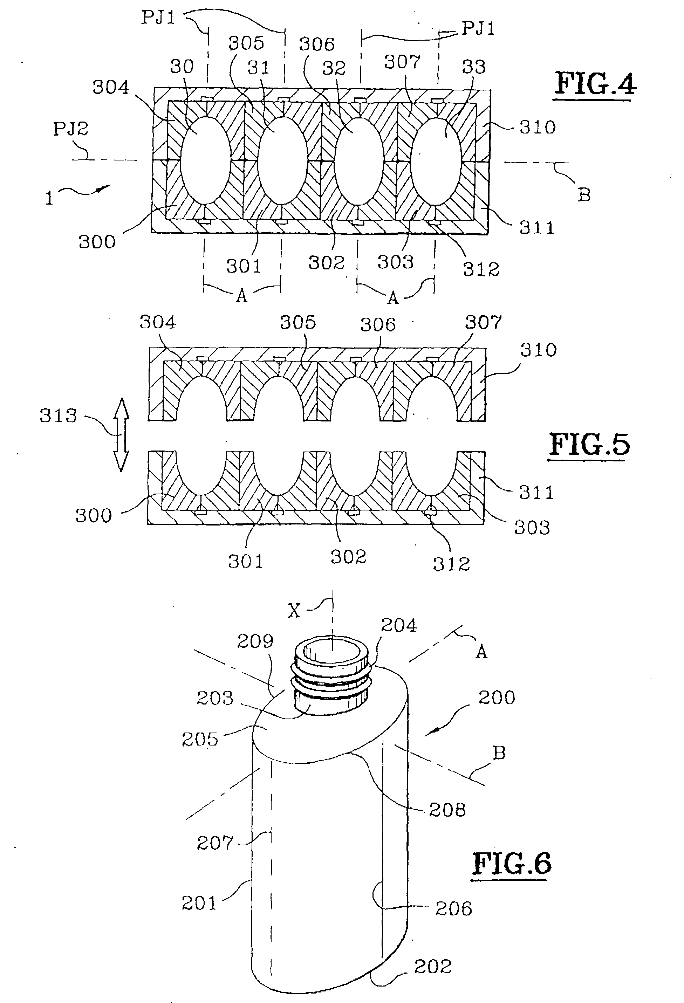

Ainsi, on obtient un flacon 200 de type de celui représenté à la figure 6. Celui ci se présente sous forme d'un corps 201 de forme allongée (elliptique ou ovale par exemple) de grand axe A et de petit axe B. De préférence, les grandes faces du flacon présentent un profil rayonné, légèrement bombé, de manière à faciliter le démoulage. Le flacon est fermé en l'une de ses extrémités par un fond 202. L'autre extrémité est surmontée d'un col 203 portant un filetage apte à coopérer de manière amovible avec un filetage 204 porté par un bouchon (non représenté). Le corps 201 est relié au col par un épaulement 205. Une fine ligne 206 est visible sensiblement sur le milieu de chacune des grandes faces 208, 209 du flacon 200. Cette ligne correspond à la ligne de jointure des deux demi-coques du moule, selon le plan de joint PJ2. Cette ligne est à peine perceptible, et peut être masquée par tout moyen approprié, par exemple au moyen d'une étiquette. Sur les petites faces du flacon, on peut distinguer une ligne en traits interrompus, correspondant à la ligne d'évents selon le plan de joint PJ1. Cette ligne est également à peine visible. En tout état de cause, aucune de ces lignes, continue ou interrompue, n'affecte de manière sensible l'esthétique du produit.

Dans le mode de réalisation de la figure 3, l'empreinte 101 du moule 1 est de section transversale sensiblement rectangulaire. De la même manière que pour le moule des figures 1A-1C, le moule est constitué de deux demi-coques 2, 3, aptes à être réunies, en vue du soufflage d'un objet, le long d'un plan de joint PJ2, correspondant au plan médian passant par le petit axe B. Chacune des demi-coques 2, 3 est constituée de trois parties 5, 6, 60; respectivement, 7, 8, 80, maintenues serrées à l'intérieur d'une carcasse en deux parties 310, 311. Avec une telle configuration, les zones du moule les plus éloignées de l'axe longitudinal X sont celles situées sensiblement en regard des angles du rectangle formé par la section transversale de l'empreinte. Ainsi la surface de jonction 100 entre la partie 7 et la partie 8 intercepte la paroi interne du moule au voisinage de l'un des angles du rectangle. Il en va de même pour les surfaces de jonction 100 entre les parties 8 et 80, 5 et 6, et 6 et 60. Avantageusement, ces surfaces de jonction sont orientées parallèlement à l'axe A, de manière à simplifier la réalisation du moule. Chacune des surfaces de jonction 100 présente des évents arrangés de manière identique à ceux du moule des figures 1A-1C. Pour démouler le récipient, on écarte chacune des demi-coques parallèlement au plan PJ2, selon une direction perpendiculaire audit plan PJ2. Les demi-carcasses 310, 311 présentent en regard de chacune des surfaces de jonction 100, un évidement, s'étendant sensiblement sur toute la hauteur du moule, de manière à permettre l'évacuation de l'air chassé dans les évents.

Les figures 4 et 5 illustrent de manière schématique un moule dans lequel sont disposés une pluralité d'empreintes 30, 31, 32, 33. Chacune des empreintes est conforme à celle décrite en référence aux figures 1A-1C et 2A-2C, et par conséquent, ne nécessitent aucune description supplémentaire. Les empreintes 30, 31, 32, 33 sont disposées dans le moule de sorte que leurs pseudo plans de joints respectifs PJ1, ou grands axes A, soient disposés côte à côte. Les plans de joint d'ouverture PJ2, ou petits axes B, sont sensiblement alignés. L'ensemble est maintenu à l'intérieur d'une carcasse en deux parties 310, 311, chacune des carcasses enserrant les demi-coques 300, 301, 302, 303, respectivement 304, 305, 306, 307 des différentes empreintes 30, 31, 32, 33. Les demi carcasses 310, 311, contiennent en outre des circuits de refroidissement des différentes empreintes. Un canal 312, est ménagé dans la carcasse en regard de chaque plan de joint PJ1 (et éventuellement PJ2) de manière à permettre l'évacuation de l'air provenant des évents.

Lors du démoulage illustré à la figure 5, les deux demi carcasses 310, 311 s'ouvrent parallèlement au plan d'ouverture PJ2, dans la direction représentée par la flèche 313. Ainsi, on réalise un démoulage simultané de l'ensemble des empreintes.

Dans la description détaillée qui précède, il a été fait référence à des modes de réalisation préférés de l'invention. Il est évident que des variantes peuvent y être apportées sans s'écarter de l'esprit de l'invention telle que revendiquée ci-après. En particulier, il est possible d'appliquer une dépression à l'intérieur des canaux 312 de manière à favoriser l'évacuation d'air lors du soufflage, et à parfaire le soufflage du corps creux.

## Revendications

1. Moule de soufflage (1) d'axe longitudinal X, comportant une première demi-coque (2) et une seconde demi-coque (3), les deux demi-coques étant aptes à être réunies en vue du soufflage d'un objet, le long d'un premier plan de joint (PJ2), de manière à former une empreinte de section transversale allongée, présentant un grand axe (A) et un petit axe (B), ledit premier plan de joint (PJ2) étant sensiblement perpendiculaire au grand axe (A), les demi-coques s'écartant selon une direction perpendiculaire audit premier plan de joint (PJ2) lors du démoulage de l'objet, caractérisé en ce que chaque demi-coque (2, 3) comporte au moins deux parties longitudinales, distinctes (5, 6, 60; 7, 8, 80), réunies le long d'au moins une surface de jonction (100), chaque surface de jonction étant délimitée par deux faces en regard (16, 17) de deux parties adjacentes, l'une au moins des faces (16, 17) présentant au moins un évidement de manière à définir avec l'autre face au moins une fente étroite (10, 11, 12) pour permettre, lors du soufflage de l'objet, un échappement d'air selon ladite surface.

2. Moule de soufflage (1) selon la revendication 1 caractérisé en ce que chaque demi-coque (2, 3) comporte deux parties distinctes (5, 6; 7, 8), dont deux faces respectives (16, 17) sont maintenues jointes le long d'un second plan de joint (PJ1) situé sensiblement sur le grand axe (A), et perpendiculaire au premier (PJ2), l'une au moins des faces (16, 17) présentant au moins un évidement de manière à définir en chacune des extrémités du moule situées sur le grand axe, au moins une fente étroite (10, 11, 12), afin de permettre un échappement d'air selon le grand axe (A).

3. Moule selon la revendication 1 ou 2 caractérisé en ce qu'il comprend une pluralité d'évidements(10, 11, 12) répartis de manière régulière sur la hauteur du moule, les évidements étant réalisés en alternance sur l'une et l'autre des faces (16, 17) délimitant la (ou les) surface(s) de jonction (100).

4. Moule selon la revendication 1 ou 2 caractérisé en ce qu'il comprend une pluralité d'évidements (13, 14, 15) répartis de manière régulière sur la hauteur du moule, lesdits évidements étant disposés sur une seule desdites faces délimitant la (ou les) surface(s) de jonction (100).

5. Moule selon l'une quelconque des revendications 1 à 4 caractérisé en ce que les deux demi-coques sont jointes lors du soufflage de part et d'autre du grand axe (A) le long de deux faces respectives (18, 19), l'une au moins des faces respectives présentant au moins un évidement de manière à définir en chacune des extrémités du moule situées sur le petit axe (B), au moins une fente étroite (13, 14, 15) orientée selon l'axe X, afin de permettre un échappement d'air selon le petit axe (B).

6. Moule selon l'une quelconque des revendications 1 à 5 caractérisé en ce que les fentes (10 - 15) ont une hauteur selon l'axe X comprise entre 3 mm et 25 mm, et une largeur comprise entre 0,01 mm et 0,1 mm.

7. Moule selon la revendication 6 caractérisé en ce que les fentes (10 - 15) ont une hauteur selon l'axe X comprise entre 5 mm et 15 mm, et une largeur comprise entre 0,02 mm et 0,06 mm.

8. Moule selon l'une quelconque des revendications précédentes caractérisé en ce qu'il comprend une pluralité d'empreintes (30, 31, 32, 33) définies par une pluralité de premières demi-coques (300 - 303) et une pluralité de secondes demi-coques (304 - 307) de manière à mouler une pluralité d'objets simultanément, lesdites empreintes étant disposées de sorte que leurs grands axes (A) soient disposés côte à côte, les petits axes (B) étant sensiblement alignés.

9. Moule selon la revendication 8 caractérisé en ce qu'un premier organe de serrage (311) est prévu pour maintenir de manière solidaire lesdites premières demi-coques (300 - 303) de ladite pluralité d'empreintes et un second organe de serrage (310) est prévu pour maintenir de manière solidaire lesdites seconde demi-coques (304 - 307) de ladite pluralité d'empreintes, de manière à permettre un démoulage simultané de ladite pluralité d'objets.

10. Procédé de soufflage dans un moule d'axe X, d'un récipient thermoplastique (200), de section transversale allongée présentant un grand axe (A) et un petit axe (B), dans lequel le récipient est soufflé dans un moule (1) selon l'une quelconque des revendications précédentes.

11. Procédé selon la revendication 10 caractérisé en ce que le récipient thermoplastique (200) est constitué d'un matériau tel que du polyéthylène haute densité ou basse densité, polypropylène, polyéthylène térephtalate, chlorure de polyvinyle, ou d'un complexe de tels matériaux.

12. Procédé selon la revendication 10 ou 11 caractérisé en ce que le récipient est constitué d'un corps (201) dont une extrémité comporte un fond (202) et dont l'autre extrémité se termine par un col (203), relié au corps (201) par un épaulement (205).

13. Procédé selon la revendication 12 caractérisé en ce que ledit corps comporte le long du grand axe (A) deux faces convexes (208, 209).

14. Procédé selon l'une quelconque des revendications 11 à 13 caractérisé en ce qu'une pluralité de récipients sont moulés simultanément lors d'une même opération de moulage, le moule définissant une pluralité d'empreintes (30, 31, 32, 33) disposées de sorte que les récipients aient leurs grands axes (A) disposés côte à côte, les petits axes (B) étant sensiblement alignés.

15. Procédé de fabrication d'un récipient thermoplastique (200), de section transversale allongée présentant un grand axe (A) et un petit axe (B), comprenant les étapes suivantes
a) réaliser une ébauche tubulaire (20) en matériau thermoplastique;
b) introduire l'ébauche tubulaire dans un moule de soufflage (1);
c) souffler ladite ébauche tubulaire de manière à plaquer le matériau thermoplastique contre les parois internes du moule (1); et
d) après refroidissement, démouler le récipient (200);
caractérisé en ce que le moule de soufflage (1) est conforme à l'une quelconque des revendications 1 à 9.

16. Procédé selon la revendication 15 caractérisé en ce que l'ébauche tubulaire (20) est obtenue par extrusion.

17. Récipient (200) obtenu par le procédé selon l'une quelconque des revendications 10 à 16.
